# EUROPEAN PATENT APPLICATION

(11) **EP 1 411 099 A1**
(43) Date of publication of application: **21.04.2004**
(21) Application number: 02079312.1
(22) Date of filing: 17.10.2002
(51) Int. Cl.: C09J 153/02, C09J 7/02, C08L 53/02

(54) **Packaging tape adhesive composition and packaging tape comprising it**

(71) Applicant: KRATON Polymers Research B.V., 1031 CM Amsterdam (NL)
(72) Inventor: Van de Vliet, Brigitte Maria Ludovica Christin, 1348 Ottignies-Louvain-La-Neuve (BE); Vermunicht, Geert Emiel Anna, 1348 Ottignies-Louvain-La-Neuve (BE)
(74) Representative: Kortekaas, Marcellinus C. J. A.

(57) **Abstract**

Packaging tape adhesive composition for cardboard box sealing tapes, comprising
(i) a triblock copolymer, obtainable by polymerization of predominantly styrene and of predominantly isoprene respectively, and
(ii) a diblock copolymer, obtainable by subsequent polymerization of predominantly styrene and predominantly isoprene, and wherein the proportion of the diblock copolymer component (ii) is in the range of from 5 to 20 wt%, relative to the weight of (i) and (ii)
(iii) at least one tackifying resin,
(iv) optionally a naphtenic oil or paraffinic oil, and
(v) optionally an antioxidant and/or other auxiliaries; as well as packaging tapes for cardboard box sealing comprising it; and block copolymers for its preparation.

## Description

### Field of the invention

The present invention relates to a packaging tape adhesive composition and to a packaging tape comprising it.

More in particular, the present invention relates to an adhesive composition for the manufacture of packaging tapes for cardboard box sealing, which must exhibit a relatively high value of shear strength.

It will be appreciated that moreover such a tape simultaneously has to be relatively soft and be economically feasible, i.e. it must be produced at a cost price as low as possible.

In said tapes the adhesive composition is applied on a flexible substrate, such as a thin substrate of a polyolefin, polyamide or polyester.

### Background of the invention

Varying efforts were made during the last decades to provide block copolymers for improved adhesive compositions for packaging tapes.

From US patent No. 3,753,936 (A-B)ₓY type polymers were known, wherein A represents non-elastomeric polymer blocks, or segments and B represents elastomeric polymer segments, Y is an atom or group of atoms derived from a poly-functional treating agent used in the formation of the radial polymers, and x is an integer of at least 3 and can be equal to the number of functional groups of said poly-functional treating agent. The radial block polymer thus can be characterized as having at least three polymer branches with each branch of the radial block polymer comprising terminal non-elastomeric segments. The branches of the radial block polymer contain a terminal non-elastomeric segment attached to an elastomeric polymer segment.

US patent No. 3,935,338 disclosed block copolymers having at least two monoalkenyl arene polymer blocks and at least one elastomeric conjugated diene polymer block. The macromolecular configuration could be either linear or radial dependent upon the method by which the block copolymer was formed. Typical block copolymers of the simplest configuration would have the structure polystyrene-polyisoprene-polystyrene, and polystyrene-polybutadiene-polystyrene. The adhesive composition of US patent No. 3,935,338 called for 25 to 100 parts by weight extending oil per hundred parts by weight rubber. The addition of even a moderate amount of oil was taught to drastically reduce the peel adhesion and the shear adhesion failure temperature, thus indicating that such compositions would be unsatisfactory in many adhesive applications even though the addition of oil did in fact substantially reduce the viscosities of the hot-melts derived there-from.

US patent No. 3,954,692 disclosed a mixture of (a) an unvulcanized elastomeric block copolymer having the general configuration A-B-A wherein each A is an independently selected non-elastomeric monovinyl aromatic hydrocarbon polymer block having an average molecular weight of 2,000 to 100,000, the total block A content being from about 10 to about 50% by weight (wt%) of the copolymer, and B is an elastomeric conjugated diene polymer block having an average molecular weight from about 25,000 to about 1,000,000, and (b) a compatible, thermoplastic tackifying resin containing carbon-carbon unsaturation therein and derived from hydrocarbons having from 5 to 8 carbon atoms and at least one carbon-to-carbon double bond therein selected from aliphatic hydrocarbons and alicyclic hydrocarbons.

US patent No. 5,183,705 disclosed tacky pressure sensitive adhesive compositions comprising (1) a radical teleblock copolymer having at least three monoalkenylarene polymer blocks and a branched elastomeric conjugated diene polymer block; (2) a tackyfying resin; and (3) from about 5 to about 20 parts by weight extending oil per hundred parts by weight of radial polymer.

The radial teleblock copolymer was said to be preferably of the formula (AB)n-Z, wherein n represents an integer equal to or greater than 3 and Z represents a multifunctional linking agent.

Said pressure sensitive adhesive compositions were indicated to provide an improved adhesive for hot-melt coating of pressure sensitive tapes suitable for sealing containers.

The monoalkenylarene polymer blocks of said block copolymers comprise from about 17 to 23 wt% of said block copolymer and the molecular weight of said block copolymer ranged from about 180,000 to 250,000; n should preferably represent the integer 3 or 4.

From US patent No. 5,194,500 adhesive compositions were known, which contained a tackifying resin and a branched three-armed S-I-S block copolymer composition, wherein S represented a poly(alkenyl-aromatic hydrocarbon) block and wherein I was a poly(isoprene) block. Said branched block copolymer showed a molecular weight (as polystyrene equivalent) from 180,000 to 250,000, a polystyrene content from 17 to 23 wt% of the block copolymer composition and a percentage of S-I arms, which are load bearing, by weight of the block copolymer composition is greater than 85%. These adhesive compositions were indicated to have an acceptable holding in a shear test.

Possible effects of diblocks present on pressure sensitive adhesive properties were described in PSTC Tech XIV, Technical Seminar Proceedings May 1991, page 119-137, by S.H. Dillman. However the effect of diblocks in pressure sensitive adhesive compositions was found to be a complex function of both formulation and other variables which could be classified into two groups; compositional variables and architectural variables.

Compositional variables included the monomers used an their relative fractions and architectural variables dealt with how the monomers were put together into a molecule.

As a general rule there was expressed that in most adhesive formulations increased levels of diblock generally will produce higher 180° peel strength and lower melt viscosities, but lower SAFTS (a lap shear bond to Mylar or Kraft paper) and lower Rolling Ball Tack.

It was concluded that the effect of diblock on holding powers was complex and that increasing levels of diblock can either increase or decrease holding powers depending on formulation as well as other molecular characteristics.

In particular the suitability of packaging tapes for sealing cardboard boxes can be tested according to the so-called Flap test method, as disclosed in C.P.L.C. Donker, European Adhesives and Sealants, December 1991, pages 21-24. Said disclosed Flap test is a combination of peel adhesion and shear adhesion.

It will be appreciated that in particular for sealing of cardboard boxes there has been developed a need for packaging tapes, which show a well balanced improved combination of relevant physical properties, i.e. holding power to Kraft, holding power in Flap tests to Kraft (0.5, 1 or 2 kg), Rolling Ball Tack (RBT) and hot melt viscosity at 190°C (HMV).

Therefore an object of the present invention is to provide improved pressure sensitive adhesive compositions for packaging tapes for cardboard boxes, and to provide improved block copolymers to be used in them.

As result of extensive research and experimentation, said block copolymers and adhesive compositions aimed at have now been found

### Summary of the invention

According to a first aspect, the present invention relates to a packaging tape adhesive composition for cardboard box sealing tapes, comprising comprising
(i) a triblock copolymer, obtainable by polymerization of predominantly styrene and of predominantly isoprene respectively, having an apparent molecular weight in the range of from 165,000 to 250,000, wherein both predominantly poly(styrene) blocks have an apparent molecular weight of from 9,000 to 14,000, and
(ii) a diblock copolymer, obtainable by subsequent polymerization of predominantly styrene and predominantly isoprene, and having an apparent molecular weight from 88,000 to 95,000, wherein the predominantly poly(styrene) block has an apparent molecular weight in the range of from 9,000 to 14,000 and wherein the proportion of the diblock copolymer component (ii) is in the range of from 5 to 20 wt%, relative to the weight of (i) and (ii)
(iii) at least one tackifying resin in an amount of from 50 to 120 parts by weight per 100 parts by weight of block copolymers,
(iv) optionally a naphtenic oil or paraffinic oil in an amount of from 0 to 10 parts by weight per 100 parts by weight of block copolymers, and
(v) optionally an antioxidant and/or other auxiliaries, in an amount from 0.1 to 10 parts by weight per 100 parts by weight of block copolymers.

Another aspect of the present invention is formed by a blend of block copolymers for the manufacture of packaging tape adhesive compositions for cardboard box sealing, comprising:
(i) a triblock copolymer, obtainable by polymerization of predominantly styrene and of predominantly isoprene respectively, having an apparent molecular weight in the range of from 165,000 to 250,000, wherein both predominantly poly(styrene) blocks have an apparent molecular weight of from 9,000 to 14,000, and
(ii) a diblock copolymer, obtainable by subsequent polymerization of predominantly styrene and predominantly isoprene, and having an apparent molecular weight from 88,000 to 95,000, wherein the predominantly poly(styrene) block has an apparent molecular weight in the range of from 9,000 to 14,000 and wherein the proportion of the diblock copolymer component (ii) is in the range of from 5 to 20 wt%, relative to the weight of (i) and (ii).

Another aspect of the present invention is formed by pellets containing the herein before defined adhesive composition for packaging tapes for sealing cardboard boxes, obtainable by:
a) adding the blockcopolymer components, a tackifying resin and optionally a naphtenic oil and/or antioxidant and/or auxiliaries and/or antifoaming and/or detergent, to an extruder;
b) blending and extruding the components in the extruder to obtain an extrudate;
c) pelletizing the extrudate with an underwater pelletizer to obtain wet pellets, and
d) drying the wet pellets to obtain pellets containing the adhesive composition and optionally treating the wet or dry pellets with a dusting agent.

It will be appreciated that another aspect of the present invention is formed by packaging tapes for cardboard sealing comprising an adhesive composition as specified hereinbefore.

### Detailed description of the invention

With the terms "predominantly styrene"and "predominantly isoprene", as used throughout the present specification, is meant respectively that substantially pure homopolymer blocks or copolymer blocks derived from a major monomer, such as styrene or isoprene, i.e. at least 80 wt% and preferably more than 95 wt%, mixed with a minor amount of structurally related comonomers, e.g. methylstyrene in case of styrene as major monomer or butadiene in the case of isoprene as major monomer, or mixed with a minor amount of the other comonomer occurring in the final block copolymers (e.g. isoprene in styrene as major monomer or styrene in isoprene as major monomer).

Most preferably, the block copolymers to be used according to the present invention are composed of substantially pure poly(styrene) homopolymer blocks and substantially pure poly(isoprene) homopolymer blocks.

The more preferred triblock copolymers have a styrene content of from 16 to 20 wt% and most preferably from 17 to 19 wt%. The more preferred apparent molecular weight of the complete triblock copolymers is in the range of from 178,000 to 179,000.

According to a preferred embodiment of the present invention, the block copolymer compositions to be used in the adhesive compositions for packaging tapes are composed of:
(y) a triblock copolymer obtained by full sequential polymerization of predominantly styrene and predominantly isoprene, having an apparent molecular weight in the range of from 165,000 to 250,000 and wherein both predominantly poly(styrene) blocks have an apparent molecular weight of from 9,000 to 14,000, and
(z) a triblock copolymer, obtained by coupling of living diblock copolymers obtained by sequential polymerization of predominantly styrene and isoprene respectively, said triblock copolymer having an apparent molecular weight of from 165,000 to 250,000, wherein both predominantly poly(styrene) blocks have an apparent molecular weight of from 9,000 to 14,000, whereof the proportion of co-produced terminated diblock copolymer in the block copolymer (z) is in the range of from 25 to 65 mole%, and wherein the weight ratio of the triblock copolymers (y) and (z) is such that the proportion of diblock copolymer in the final blend of (y) and (z) is in the range of from 5 to 20 wt%.

It will be appreciated that the preferably coproduced diblock copolymers in the triblock copolymer component (ii) contain poly(styrene) blocks which are identical with those in the triblock copolymer component (ii) and are substantially identical with those in the triblock copolymer component (i), whereas their poly(isoprene) blocks are the half of the poly(isoprene) blocks in the triblock copolymer component (ii).

In preferred block copolymers mixtures any triblock copolymer component has an apparent molecular weight in the range of from 168,000 to 190,000 and contains predominantly poly(styrene) blocks having an apparent molecular weight in the range of from 10,000 to 13,000, and the proportion of diblock copolymer in the final block copolymer component is in the range of from 7 to 17wt%.

In the most preferred block copolymer mixtures the respective poly(styrene) and poly(isoprene) blocks will show as much as possible the same molecular weight.

The most preferred apparent molecular weights of the poly(styrene) blocks are in the range of from 10,000 to 11,500.

The linear triblock copolymer components (i) are obtainable by subsequent complete anionic polymerization of predominantly styrene monomer, predominantly isoprene monomer and substantially the same amount of predominantly styrene respectively, by means of an organolithium initiator and more preferably butyl lithium in an organic solvent, such as cycloaliphatic or aromatic solvents or mixtures thereof, and preferably cyclopentane.

The linear triblock copolymer components (ii) are obtainable by
a. preparation of a living diblock copolymer by subsequent complete anionic polymerization of predominantly styrene monomer and predominantly isoprene by means of an organolithium initiator in an organic solvent as specified hereinbefore, and coupling the intermediate living polymers by means of a bi-functional coupling agent, such as MDCS (methyl dichlorosilane), carbon dioxide, DBE (di-bromoethane), MBZ (methyl benzoate), DMA (dimethyladipate), DEAR (diethyladipate), EPON 825 (a diglycidyl ether of a bisphenol, EPON is a trademark), and terminating the remaining living polymer with a proton donating agent such as water, acid or alcohol, or by
b. preparation of a living diblock copolymer by subsequent complete anionic polymerization of predominantly styrene and predominantly isoprene by means of an organolithium initiator in an organic solvent, followed by a second initiation with an organolithium initiator and subsequent polymerization of an additional amount of a predominantly isoprene until completeness and addition and polymerization until completeness of an additional amount of predominantly styrene.

It will be appreciated that by fine-tuning of the respective additional amounts of isoprene and styrene, specifically desired fully sequential triblock can be obtained in combination with an adjustable predetermined amount of diblock copolymer, having a predominantly poly(styrene) block, the apparent molecular weight is substantially the same as the one of the predominantly poly(styrene) blocks of the triblock copolymer.

The block copolymers to be used in the adhesive compositions of the present invention may be prepared by any method in the art, illustrated in e.g. US patents Nos. 3,231,635; 3,251,905; 3,390,207; 3,598,887 and 4,219,627 and European patent applications Nos. EP 0413.294A, EP 0387.671A and EP 0636.654A and in WO 94/22931, incorporated herein by reference.

It will be appreciated that also mixtures of linear triblock copolymers and diblock copolymers, which have been separately prepared, can be used for the adhesive compositions of the present invention, if mixed in the specified weight-ratios.

Examples of suitable block copolymer compositions are mixtures of commercial grades KRATON D 1117 and KRATON D 1160 in the specified weight ratios.

Another preferred aspect of the present invention is formed by packaging tape adhesive compositions for cardboard box sealing tapes, characterized in that the mixture of components (i) and (ii) is composed of:
(y) a triblock copolymer obtained by full sequential polymerization of predominantly styrene and predominantly isoprene, having an apparent molecular weight in the range of from 165,000 to 250,000 and preferably from 168,000 to 190,000, and wherein both predominantly poly(styrene) blocks have an apparent molecular weight of from 9,000 to 14,000 and preferably from 10,000 to 13,000, and
(z) a triblock copolymer, obtained by coupling of living diblock copolymers obtained by sequential polymerization of predominantly styrene and isoprene respectively, said triblock copolymer having an apparent molecular weight of from 165,000 to 250,000 and preferably from 168,000 to 190,000 wherein both predominantly poly(styrene) blocks have an apparent molecular weight of from 9,000 to 14,000 and preferably from 10,000 to 13,000, whereof the proportion of co-produced terminated diblock copolymer in the block copolymer (ii) is in the range of from 25 to 65 mole% and preferably from 30 to 35 mole%, and wherein the weight ratio of the triblock copolymers (y) and (z) is such that the proportion of diblock copolymer in the final blend of (y) and (z) is in the range of 5 to 20 wt% and preferably from 7 to 17 wt%.

Most preferred adhesive compositions comprise triblock copolymers, containing poly(styrene) blocks of apparent molecular weight in the range of from 10,000 to 11,500.

It will be appreciated that another preferred aspect of the present invention is formed by pellets, containing the herein before defined preferred, adhesive composition for packaging tapes for sealing of cardboard boxes.

Tackifying resins are well known to those skilled in the art and a wide variety of different tackifying resins is available commercially. The tackifying resins to be used in the present invention are preferably unsaturated hydrocarbon resin, obtained from petroleum feedstock like C₅ stream. The hydrocarbon resins can also be made by copoymrization of C₅ and C₉ feedstocks.

The tackifying resin preferably has a softening point as determined by the Ring and Ball method (ASTM E28) in the range of from 70 to 130°C and more preferably 80 to 105°C.

The tackifying resin is present in an amount from 50 to 120 parts by weight per 100 parts by weight of block copolymer (phr). An adhesive composition containing less than 50 phr will not have sufficient tack and a composition containing more than 120 phr will be too tacky and will be difficult to coextrude. Preferably, the tackifying resin is present in an amount from 80 to 120 phr, more preferably from 90 to 110 phr.

The tackifying resins useful in the practice of this invention include hydrocarbon resins, synthetic polyterpenes, rosin esters and natural terpenes which are semi-solid or solid at ambient temperatures, and soften or become liquid at temperatures, ranging generally from 70 to 135°C, preferably from 85°C to 120°C.

Exemplary of the primary tackifying resins are compatible resins such as
(1) natural and modified rosins such as, for example, gum rosin, wood rosin, tall oil rosin, distilled rosin, hydrogenated rosin, dimerized rosin and polymerized rosin;
(2) glycerol and pentaerythritol esters of natural and modified rosins, such as, for example, the glycerol ester of pale, wood rosin, the glycerol ester of hydrogenated rosin the glycerol ester of polymerized rosin, the pentaerythritol ester of hydrogenated rosin, ,and the phenolic-modified pentaerythritol ester of rosin;
(3) copolymers and terpolymers of natural terpenes, e.g. styrene/terpene and alphamethyl styrene/terpene;
(4) polyterpene resins having a softening point, as determined by ASTM method E28-58T, of from 80°C to 150°C, the latter polyterpene resins generally resulting from the polymerization of terpene hydrocarbons, such as the bicyclic monoterpene known as pinene, in the presence of Friedel-Crafts catalysts at moderately low temperatures;
5) phenolic modified terpene resins and hydrogenated datives thereof such as, for example, the resin product resulting from the condensation, in an acid medium, of a bicyclic terpene and phenol;
(6) aliphatic petroleum hydrocarbon resins having a Ball And Ring softening point of from 70°C to 135°C, the latter resin resulting from the polymerization of monomers consisting primarily of olefins and diolefins; also included are the hydrogenated aliphatic petroleum hydrocarbon resins;
(7) aromatic petroleum hydrocarbon resins, and mixed aromatic and aliphatic petroleum hydrocarbon resins, and the hydrogenated derivatives thereof;
(8) aromatic modified alicyclic petroleum hydrocarbon resins and the hydrogenated derivatives thereof; and
(9) alicyclic petroleum hydrocarbon resins and the hydrogenated derivatives thereof.

The preferred tackifying resins for use in the practice of this invention are represented by those of the sub-paragraphs (1), (3), (6) and (8) supra, or mixtures thereof.

Most preferred tackifying resins have been found to belong to the type of resins as specified in sub-paragraphs 6 and 8.

Examples of such resins are marketed under the tradename PICCOTAC, HERCULES MBG WINGTACK and HERCOTAC and in particular PICCOTAC 212 or 1094, HERCULES MBG 208 and those resins marketed by EXXON under the tradename ESCOREZ 2000 series.

A preferred tackifying resin is PICCOTAC 212 or PICCOTAC 1094 I, which actually consists of a modified aliphatic hydrocarbon resin.

Plasticisers are well known to those skilled in the art. Typically, the hardness of polymer compound is decreased by adding a plasticizer. The plasticizer is typically substantially compatible with at least the conjugated diene block(s) of the block copolymer.

Examples of plasticizers commonly used include oil, preferably naphtenic or paraffinic oil, more preferably paraffinic oil.

Examples of alternative plasticizers which may be used in the compound of the invention are, oligomers of randomly or sequentially polymerized styrene and conjugated diene, oligomers of conjugated diene, such as butadiene or isoprene, liquid polybutene-1, and ethylene-propylene-diene rubber, all having a weight average molecular weight in the range from 300 to 35,000, preferably from 300 to 25,000, more preferably from 500 to 10,000.

The adhesive composition may further comprise a poly(monovinyl aromatic block) compatible resin. Such resins are well known to those skilled in the art.

Examples of suitable resins include coumarone-indene resin, polyindene resin, poly(methyl indene) resin, polystyrene resin, vinyltoluene-alphamethylstyrene resin, alphamethylstyrene resin and polyphenylene ether, in particular poly(2,6-dimethyl-1,4-phenylene ether).

Poly(monovinyl aromatic hydrocarbon) compatible resins are e.g. sold under the tradenames HERCURES, ENDEX, KRISTALEX, NEVCHEM and PICCOTEX.

The adhesive composition preferably further comprises a dusting agent in an amount from 0.5 to 10% by weight, more preferably from 0.2 to 5% by weight, based on the total composition.

The dusting agent is a very fine powder having on average a particle size between 5 nm and 10 µm. By using a dusting agent, an adhesive composition which is free flowing can be obtained. As used herein the term "free flowing adhesive composition" refers to an adhesive composition of the present invention which contains a dusting agent and in which the particles of the composition do not adhere to one another. In principle any such fine powder may be employed but it is preferred that a polyolefin, such as polyethylene, silica, talc or calcium carbonate powder is used. Examples of commercially available silica powders include, but are not limited to, AEROSIL R972 (average particle size about 16 nm), AEROSIL 200 (average particle size about 12 nm, SIPERNAT, DUROSIL, DUREX and ULTRASIL (average particle size about 16 nm) (AEROSIL, SIPERNAT, DUREX and ULTRASIL are trademarks). Examples of commercially available calcium carbonate powders include, but are not limited to, DURCAL 5 (average particle size about 6 µm) and MILLICARB (average particle size about 3 µm) (DURCAL and MILLICARB are trademarks). The dusting agent is typically used in an amount of from 0.05 to 10% by weight, preferably from 0.1 to 5% by weight, based on the total weight of the composition.

The adhesive composition may further comprise from 0 to 10 parts by weight of filler per 100 parts by weight of block copolymer. Examples of suitable fillers include silica and calcium carbonate.

In addition to the above-mentioned components, the adhesive composition may contain one or more auxiliary components such as stabilisers, flame retardants, anti-blocking agents and anti-slipping agents. These components are typically present in an amount from 0.1 to 10% by weight, preferably from 0.5 to 5% by weight, basis the total adhesive composition.

The present invention further relates to a process for preparing pellets containing the above adhesive composition. The process involves use of an extruder and an underwater pelletizer.

Extruders are well known to those skilled in the art and are available commercially. Preferably, the extruder is a twin-screw extruder, more preferably a co-rotating twin-screw extruder.

Underwater pelletizers are well known to those skilled in the art and are available commercially. Other pelletizers such as face cutters and strand granulators have been found to be less suitable as use of face cutters and strand granulators does not result in uniform pellet size distributions. Furthermore, most of the adhesive compositions have the tendency to agglomerate in a face cutter or stick to the knives of a strand granulator, preventing easy production of these adhesive compositions in pellet form.

In the process for producing pellets with an underwater pelletizer it has been found advantageous to add an antifoaming agent and a detergent to the pelletizer water to avoid agglomeration of the pellets.

The substrate layer to be used for the pressure sensitive adhesive tapes for cardboard box sealing is preferably an extrudable substrate layer. Examples include polyolefins such as polyethylene, polypropylene and copolymers of polyethylene and polypropylene.

The stabilizer and/or antioxidant used in the adhesive compositions of the present invention includes high molecular weight hindered phenol derivatives, high molecular weight hindered amine or triazine derivatives or phosphorous and/or sulphur containing hindered compounds, or mixtures thereof.

Preferred representatives of stabilizers and/or anti-oxidants are pentaerythrityl-tetrakis (3,5-di-tert-butyl-4-hydroxy-hydro-cinnamate (IRGANOX 1010): octadecyl ester of 3,5-bis (1,1-di-methylethyl)-4-hydroxy benzene propanoic acid (IRGANOX 1076; 2,4-bis (n-octylthio)-6-(4-hydroxy-3,5-di-tert-butylanilino)-1,3,5-triazine (IRGANOX 565); 2-tert-butyl-6-(3-tert-butyl-2'-hydroxy-5-methylbenzyl)-4-methylphenyl acrylate (SUMILIZER GM); tris (nonylphenyl)phosphate; tris (mixed mono- and di-phenyl)-phosphite; bis (2,4-di-tert-butylphenyl)pentaerythritol di phosphate (ULTRANOX 626); distearyl pentaerythritol dophosphite (WESTON 618);styrenated diphenylamine (NAUGARD 445); N-1,3-dimethylbutyl N'-phenyl-paraphenylenediamine (SUMILIZER 116 PPD); tris (2,4-di-tert-butylphenyl)phosphate (IRGAFOS 168); 4,4-butylidene-bis-(3-methyl-6-tert-butylphenol) (SUMILIZER BBMS); ore combinations thereof.

Most preferable are used combinations of tris(nonylphenyl)-phosphite (TNPP) and IRGANOX 1076, IRGANOX 565, IRGANOX 1010 or SUMILIZER GM (IRGANOX, SUMILIZER, ULTRANOX, NAUGARD, WESTON and IRGAFOS are trademarks.

The invention will be further illustrated by the following examples, however without restricting its scope to the embodiments.

In the following examples, the percent triblock was determined by Gel Permeation Chromatography. The Hot Melt Viscosity at 190°C was measured in Pa.s by Brookfield Thermocell model DV-II with the spindle No. 28. The molecular weights were determined by GPC as styrene equivalent weight. The polystyrene content was determined by NMR spectroscopy. Rolling Ball Tack is the distance a steel ball rolls on the adhesive film with a standard initial velocity (Pressure Sensitive Tape Council test method no. 6). Small numbers indicate aggressive tack. Holding Power is the time required to pull a standard area (1.27 cm x 1.27) of tape from a standard test surface (steel, Kraft paper) under a standard load (2 kg), in shear at 2 degrees antipeel (PSTC no. 7)

### Example

Adhesive compositions according to the present invention and comparative compositions were prepared from two S-I-S block copolymers, the characterizing details of which have been listed in the following

**Table 1**

| Polymer | A | B |
|---|---|---|
| Step I mol/kg | 11,100 | 10,600 |
| STEP III mol/kg | 178,000 | 179,000 |
| CE % | | 67% |
| PSC %wt | 19 | 17 |
| Diblock content %wt | 0 | 33 |

The above mentioned block copolymer A was prepared by full sequential polymerization of batches of substantially pure styrene, isoprene and styrene respectively by means of sec butyl lithium as initiator and in cyclohexane as solvent.

The abovementioned block copolymer B was prepared by full sequential polymerization of batches of substantially pure styrene and isoprene initiated by sec butyl lithium in cyclohexane as solvent, followed by coupling of the living S-I block copolymers by means of dibromoethane and termination of the remaining polymers with water.

Pressure sensitive adhesive compositions I-V were prepared from components as listed in table 2 and the relevant properties of them have been listed in table 3. Compositions II and III are according to the invention, and show an improved combination of adhesive properties for packaging tapes for sealing cardboard boxes.

**Table 2**

| Composition | I | II | III | IV | V |
|---|---|---|---|---|---|
| polymer A, in wt% (A + B) | 100% | 75% | 50 | 25 | 0 |
| polymer B, in wt% (A + B) | 0 | 25 | 50 | 75 | 100 |
| diblock content, in wt% | 0 | 8 | 16.5 | 25 | 33 |
| PICCOTAC 1094, in phr | 110 | 110 | 110 | 110 | 110 |
| EDELEX 956, in phr | 10 | 10 | 10 | 10 | 10 |
| IRGANOX 1010, in phr | 2 | 2 | 2 | 2 | 2 |

**Table 3**

| Composition | I | II* | III* | IV | V |
|---|---|---|---|---|---|
| HMV 190°C in Pa.s | 40.4 | 31.6 | 28.7 | 14.4 | 12.9 |
| Flaptest Kraft at 0.5 kg in minutes | 1025 | 2000 | 3211 | 1419 | 534 |
| HP 40°C Kraft in minutes | 98 | 173 | 500 | 137 | 82 |
| RBT in cm | 15 | 9 | 8 | 7 | 6 |

## Claims

1. Packaging tape adhesive composition for cardboard box sealing tapes, comprising
(i) a triblock copolymer, obtainable by polymerization of predominantly styrene and of predominantly isoprene respectively, having an apparent molecular weight in the range of from 165,000 to 250,000, wherein both predominantly poly(styrene) blocks have an apparent molecular weight of from 9,000 to 14,000, and
(ii) a diblock copolymer, obtainable by subsequent polymerization of predominantly styrene and predominantly isoprene, and having an apparent molecular weight from 88,000 to 95,000, wherein the predominantly poly(styrene) block has an apparent molecular weight in the range of from 9,000 to 14,000 and wherein the proportion of the diblock copolymer component (ii) is in the range of from 5 to 20 wt%, relative to the weight of (i) and (ii)
(iii) at least one tackifying resin in an amount of from 50 to 120 parts by weight per 100 parts by weight of block copolymers,
(iv) optionally a naphtenic oil or paraffinic oil in an amount of from 0 to 10 parts by weight per 100 parts by weight of block copolymers, and
(v) optionally an antioxidant and/or other auxiliaries, in an amount from 0.1 to 10 parts by weight per 100 parts by weight of block copolymers.

2. Packaging tape adhesive composition for cardboard box sealing tapes, according to claim 1, **characterized in that** the mixture of components (i) and (ii) is composed of
(y) a triblock copolymer obtained by full sequential polymerization of predominantly styrene and predominantly isoprene, having an apparent molecular weight in the range of from 165,000 to 250,000 and wherein both predominantly poly(styrene) blocks have an apparent molecular weight of from 9,000 to 14,000, and
(z) a triblock copolymer, obtained by coupling of living diblock copolymers obtained by sequential polymerization of predominantly styrene and isoprene respectively, said triblock copolymer having an apparent molecular weight of from 165,000 to 250,000, wherein both predominantly poly(styrene) blocks have an apparent molecular weight of from 9,000 to 14,000, whereof the proportion of co-produced terminated diblock copolymer in the block copolymer (z) is in the range of from 25 to 65 mole%, and wherein the weight ratio of the triblock copolymers (y) and (z) is such that the proportion of diblock copolymer in the final blend of (y) and (z) is in the range of from 5 to 20 wt%.

3. Packaging tape adhesive composition according to claims 1 and 2, wherein any triblock copolymer component has an apparent molecular weight in the range of from 168,000 to 190,000 and contains predominantly poly(styrene) blocks having an apparent molecular weight of from 10,000 to 13,000, and wherein the proportion of diblock copolymer in the final block copolymer component is in the range of from 7 to 17 wt%.

4. Packaging tape adhesive composition according to any of claims 1 to 3, wherein the apparent molecular weight of all the predominantly poly(styrene) blocks are in the range of from 10,500 to 11,500.

5. Packaging tape adhesive composition according to claim 1, wherein the tackifying resin (iii) occurs in an amount of from 100 to 110 parts by weight per 100 parts by weight of block copolymers.

6. Packaging tape for cardboard box sealing, comprising a composition according to any one of the claims 1 to 5 and substrate layer.

7. A packaging tape according to claim 6, wherein the substrate is selected from polyethylene and polypropylene.

8. A packaging tape adhesive composition according to any one of claims 1 to 7, **characterised in that** it is in the form of pellets.

9. A blend of block copolymers for the manufacture of packaging tape adhesive compositions for cardboard box sealing, comprising
(i) a triblock copolymer, obtainable by polymerization of predominantly styrene and isoprene respectively, said triblock having an apparent molecular weight in the range of from 165,000 to 250,00 wherein both predominantly poly(styrene) blocks have an apparent molecular weight of from 9,000 to 14,000, and
(ii) a diblock copolymer, obtained by subsequent polymerization of predominantly styrene and predominantly isoprene, and having an apparent molecular weight from 88,000 to 95,000, and wherein the predominantly poly(styrene) block has an apparent molecular weight in the range of from 9,000 to 14,000, and wherein the proportion of the diblock copolymer component (ii) is in the range of from 5 to 20 wt% relative to the weight of (i) and (ii).

10. Blend of block copolymers according to claim 9, **characterized in that** the mixture of components (i) and (ii) is composed of
(y) a triblock copolymer obtained by full sequential polymerization of predominantly styrene and predominantly isoprene, having an apparent molecular weight in the range of from 165,000 to 250,000 and wherein both predominantly poly(styrene) blocks have an apparent molecular weight of from 9,000 to 14,000, and
(z) a triblock copolymer, obtained by coupling of living diblock copolymers obtained by sequential polymerization of predominantly styrene and isoprene respectively, said triblock copolymer having an apparent molecular weight of from 165,000 to 250,000, wherein both predominantly poly(styrene) blocks have an apparent molecular weight of from 9,000 to 14,000, whereof the proportion of co-produced terminated diblock copolymer in the block copolymer (z) is in the range of from 25 to 65 mole%, and wherein the weight ratio of the triblock copolymers (y) and (z) is such that the proportion of diblock copolymer in the final blend of (y) and (z) is in the range of from 5 to 20 wt%.

11. Blend of block copolymers according to any one of claims 9 or 10, wherein any triblock copolymer component has an apparent molecular weight in the range of from 168,000 to 190,000 and contains predominantly poly(styrene) blocks having an apparent molecular weight in the range of from 10,000 to 13,000, and wherein the proportion of diblock copolymer in the final block copolymer component is in the range of from 7 to 17 wt%.
